# EUROPEAN PATENT APPLICATION

(11) **EP 4 570 649 A1**
(43) Date of publication of application: **18.06.2025**
(21) Application number: 24213411.2
(22) Date of filing: 15.11.2024
(51) Int. Cl.: B64C 1/14, B64D 33/00

(54) **DEPLOYABLE DRAINS MAST**

(30) Priority: 11.12.2023 US 202318535215
(71) Applicant: Rohr, Inc., Chula Vista, CA 91910-2098 (US)
(72) Inventor: GORMLEY, Timothy, Bonita (US)
(74) Representative: Dehns

(57) **Abstract**

A deployable drains mast (202) for draining fluids from a propulsion system (100) is provided. The deployable drains mast (202) includes a bordered structure (400). The bordered structure (400) includes a plurality of exterior walls (402a-d) forming a cavity. The bordered structure (400) further includes at least one drain opening (408) to the cavity located at a first end of the bordered structure (400). The at least one drain opening (408) configured to receive a drain line (306) from a component of a core compartment of the propulsion system (100). The bordered structure (400) further includes at least one drain exit (308) from the cavity located at a second end of the bordered structure (400) opposite the first end. The drain exit (308) configured to expel the fluid.

## Description

### FIELD

The present disclosure relates generally to propulsion systems and, more particularly, to draining fluids from a core compartment of a propulsion system via a deployable drains mast.

### BACKGROUND

Modern aircraft typically utilize one or more gas turbine engines for propulsion. The engines may be housed in a nacelle, which may be wing-mounted, fuselage-mounted, tail-mounted, or some combination thereof. Typical turbofan jet engines include a fan that draws and directs a flow of ambient air into the nacelle and into and around an engine core to form, respectively, a core engine flow and a bypass flow. The core engine flow is initially passed through a compressor and then through a combustor where a pressurized core engine flow is mixed with fuel and ignited. Combustion of the fuel and air mixture results in a stream of high temperature and high-pressure gas that is used to rotate a turbine downstream of the combustor. The compressor and the fan are rotated via connection to the rotating turbine. The gas exiting the turbine is thereafter directed through an exhaust nozzle at the rear of the engine and expelled to the atmosphere.

The bypass flow is directed about the engine core and constrained by an inner wall of the nacelle. In turbofan engines, the bypass flow typically provides the main thrust for an aircraft. The bypass flow may also be used to decelerate an aircraft after landing or during a rejected takeoff. Thrust reversers mounted in the structure of the nacelle selectively reverse the direction of the bypass flow via a cascade array to generate reverse thrust. Some typical thrust reversers include an O-duct that may be utilized to eliminate a lower bifurcation within the thrust reverser.

### SUMMARY

According to an aspect of the invention, a deployable drains mast for draining fluids from a propulsion system is disclosed herein. The deployable drains mast includes a bordered structure. The bordered structure includes a plurality of exterior walls forming a cavity. The bordered structure includes also includes at least one drain opening to the cavity located at a first end of the bordered structure, the at least one drain opening configured to receive a drain line from a component of a core compartment of the propulsion system, the drain line configured to drain a fluid from the component. The bordered structure further includes at least one drain exit from the cavity located at a second end of the bordered structure opposite the first end, the at least one drain exit configured to expel the fluid that enters the cavity at the drain opening.

In various embodiments, the deployable drains mast further includes a set of hinges, the set of hinges coupled to an exterior of the bordered structure at the first end of the bordered structure and configured to couple to an inner fixed structure of the propulsion system. In various embodiments, the set of hinges are configured to allow the deployable drains mast to rotate between an open position and a stowed position.

In various embodiments, the deployable drains mast deploys to the open position via gravity responsive to the propulsion system not running. In various embodiments, the fluid exits the deployable drains mast via the gravity responsive to the deployable drains mast being deployed. In various embodiments, the deployable drains mast moves to the stowed position via fan duct pressure responsive to the propulsion system running. In various embodiments, the deployable drains mast includes a spring coupled to the set of hinges in order to balance the deployable drains mast allowing minimum pressure to stow the deployable drains mast. In various embodiments, the fluid exits the deployable drains mast via a venturi effect responsive to the deployable drains mast being stowed. In various embodiments, the deployable drains mast moves to the open position via a cylinder that contracts based on a lack of heat generated within an engine core of the propulsion system. In various embodiments, the deployable drains mast moves to the stowed position via the cylinder that contracts based on the heat generated within the engine core of the propulsion system. In various embodiments, the deployable drains mast moves to the open position via a low pressure in an actuator and wherein the deployable drains mast moves to the stowed position via a high pressure in an actuator.

According to a further aspect of the invention, also disclosed herein is a propulsion system, the propulsion system includes an inner fixed structure and a deployable drains mast for draining fluids from the propulsion system. The deployable drains mast includes a bordered structure. The bordered structure includes a plurality of exterior walls forming a cavity. The bordered structure includes also includes a at least one drain opening to the cavity located at a first end of the bordered structure, the at least one drain opening configured to receive a drain line from a component of a core compartment of the propulsion system, the drain line configured to drain a fluid from the component. The bordered structure further includes at least one drain exit from the cavity located at a second end of the bordered structure opposite the first end, the at least one drain exit configured to expel the fluid that enters the cavity at the drain opening.

In various embodiments, the deployable drains mast further includes a set of hinges, the set of hinges coupled to an exterior of the bordered structure at the first end of the bordered structure and configured to couple to an inner fixed structure of the propulsion system. In various embodiments, the set of hinges are configured to allow the deployable drains mast to rotate between an open position and a stowed position.

In various embodiments, the deployable drains mast deploys to the open position via gravity responsive to the propulsion system not running. In various embodiments, the fluid exits the deployable drains mast via the gravity responsive to the deployable drains mast being deployed. In various embodiments, the deployable drains mast moves to the stowed position via fan duct pressure responsive to the propulsion system running. In various embodiments, the deployable drains mast includes a spring coupled to the set of hinges in order to balance the deployable drains mast allowing minimum pressure to stow the deployable drains mast. In various embodiments, the fluid exits the deployable drains mast via a venturi effect responsive to the deployable drains mast being stowed. In various embodiments, the deployable drains mast moves to the open position via a cylinder that contracts based on a lack of heat generated within an engine core of the propulsion system. In various embodiments, the deployable drains mast moves to the stowed position via the cylinder that contracts based on the heat generated within the engine core of the propulsion system. In various embodiments, the deployable drains mast moves to the open position via a low pressure in an actuator and wherein the deployable drains mast moves to the stowed position via a high pressure in an actuator.

According to a further aspect of the invention, also disclosed herein is an aircraft. The aircraft includes a propulsion system, The propulsion system includes an inner fixed structure and a deployable drains mast for draining fluids from the propulsion system. The deployable drains mast includes a bordered structure. The bordered structure includes a plurality of exterior walls forming a cavity. The bordered structure includes also includes at least one drain opening to the cavity located at a first end of the bordered structure, the at least one drain opening configured to receive a drain line from a component of a core compartment of the propulsion system, the drain line configured to drain a fluid from the component. The bordered structure further includes at least one drain exit from the cavity located at a second end of the bordered structure opposite the first end, the at least one drain exit configured to expel the fluid that enters the cavity at the drain opening.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A is a perspective view of an aircraft engine having a translating cascade-type thrust reverser and a translating variable area fan nozzle, in accordance with various embodiments.
FIG. 1B is a cross sectional view of the aircraft engine illustrated in FIG. 1A, in accordance with various embodiments.
FIGS. 2A and 2B illustrate a deployable drains mast (DDM) coupled to a propulsion system, in accordance with various embodiments.
FIGS. 3A and 3B illustrate a close-up cross-sectional view of a DDM coupled to a propulsion system, in accordance with various embodiments.
FIGS. 4A and 4B illustrate perspective views of a DDM, in accordance with various embodiments.
FIGS. 5A and 5B illustrate a close-up cross-sectional view of a deployable drains mast (DDM) employing an enclosed pneumatic cylinder, in accordance with various embodiments.
FIGS. 6A and 6B illustrate a close-up cross-sectional view of a deployable drains mast (DDM) employing a ram air pressure port within the duct that pressurizes a pneumatic actuator, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Thrust reversers mounted in the structure of the nacelle selectively reverse the direction of the bypass flow via a cascade array to generate reverse thrust and some typical thrust reversers include an O-duct that may be utilized to eliminate a lower bifurcation within the thrust reverser. However, a common problem with an architecture of the O-duct is with draining fluids, such as oil, fuel, or condensate, among others, from the core compartment through the O-duct and other outer fixed structures into ambient air.

Accordingly, disclosed herein are methods and systems for a deployable drains mast (DDM). In various embodiments, the deployable drains mast extends from a low location of an inner fixed structure (IFS) of the core compartment aft and downward to a location that is outside a translating sleeve in a deployed state. In various embodiments, the DDM may be hinged at or near the forward end, common to the IFS, such that the DDM may rotate and stow flush or substantially flush into a recess located on the IFS or in close proximity to the IFS. In various embodiments, the DDM may be stowed when the engine is running and deployed when the engine is not running. In various embodiments, drainage of the various fluids occurs via gravity in the deployed position and occurs via a venturi effect in the stowed position. In various embodiments, an alternate drain path may be provided near the hinge line that opens as the DDM rotates to the stowed position. In various embodiments, the DDM may be passively or actively controlled. In that regard, in a passive operation, gravity may deploy the DDM at low speeds or when the aircraft is stopped and the DDM may be stowed responsive to fan duct pressure. In a passive operation, the mast is designed to create drag, which urges the mast to stow upon engine start-up, i.e. the DDM may be orientated 90° to a fixed drains mast. In an active operation, an actuator may be coupled to the DDM near the hinge line in order to rotate the DDM between opened and stowed positions.

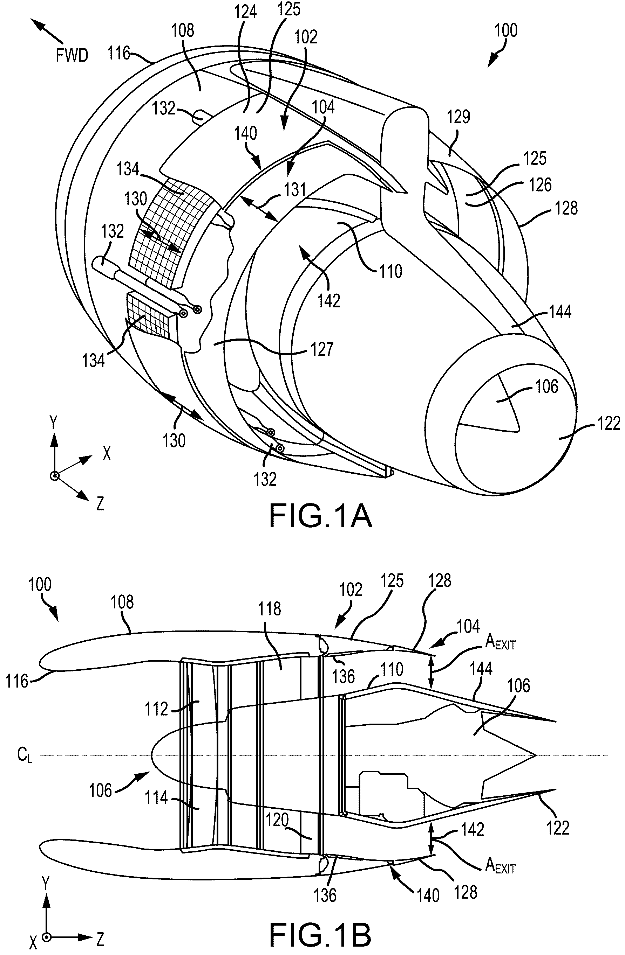

Referring now to the drawings, FIGS. 1A and 1B illustrate a perspective view and cross-sectional view, respectively, of a propulsion system 100, in accordance with various embodiments. Propulsion system 100 includes an engine 106 and a nacelle 108 surrounding the engine 106. Engine 106 is at least partially housed within an inner fixed structure (IFS) 110. A fan 112 of engine 106 is positioned within an upstream portion of nacelle 108 and includes a plurality of fan blades 114 that are mounted on a rotor. Fan 112 rotates about an engine centerline CL and draws a flow of air through an inlet 116 of nacelle 108. A bypass duct 118 is defined between engine 106 and nacelle 108. The air flow drawn into the propulsion system 100 via inlet 116 of nacelle 108 is accelerated by fan 112. A portion of the incoming air flow is directed into and through engine 106 as a core engine flow. A bypass flow enters the upstream end of the nacelle 108 and flows around and past the engine 106 and the IFS 110. The bypass flow is accelerated by the fan 112, then passes through bypass duct 118, which may include one or more stators 120, and then exits the nacelle 108 through variable area fan nozzle 104. At the same time, a high-pressure and high-temperature exhaust stream exits the engine 106 through an exhaust nozzle 122 located at the aft end of engine 106.

Still referring to FIGS. 1A and 1B, nacelle 108 includes a thrust reverser 102 of the translating-sleeve-cascade-type and a variable area fan nozzle 104 of the translating-type, in accordance with various embodiments. In FIGS. 1A and 1B, thrust reverser 102 and variable area fan nozzle 104 are shown in the stowed configuration and the closed position, respectively. Thrust reverser 102 may be positioned forward of variable area fan nozzle 104. More specifically, in various embodiments, thrust reverser 102 includes a translating sleeve 125. Translating sleeve 125 may include one or more translating sleeve sections, such as, for example, a first translating sleeve section 124 and a second translating sleeve section 126 positioned opposite first translating sleeve section 124, with both first and second translating sleeve sections 124, 126 positioned forward of a translating nozzle 128 of variable area fan nozzle 104. Translating sleeve 125 is configured to translate in the fore and aft directions (as indicated by bidirectional arrow 130) and is operated by a sleeve actuator 132 (or a plurality of sleeve actuators spaced circumferentially about engine 106). Translating sleeve 125, when in the stowed configuration, covers a cascade array 134 (or an array of cascade passages). Translation of translating sleeve 125 in the aft direction to a deployed configuration results in deployment of a blocker door 136 (or a plurality of blocker doors spaced circumferentially about engine 106). Deployment of blocker door(s) 136 into bypass duct 118 causes a portion of the bypass flow to exit the bypass duct 118 through cascade array 134, which turns the exiting flow in a generally forward direction to create reverse thrust.

Translating nozzle 128 of variable area fan nozzle 104 may be selectively adjusted as engine 106 operates under different flight conditions. As discussed above, such an adjustment may be used to match engine performance to particular flight condition. As shown in FIG. 1B, translating nozzle 128 may be selectively translated (e.g., moved fore and aft) to vary an exit area "A_{EXIT}" of the exit of variable area fan nozzle 104 (or a primary fan nozzle exit 142) and to adjust an amount of the bypass flow spilled through an upstream exit 140 formed by a gap between translating nozzle 128 and translating sleeve 125. For purposes of illustration, variable area fan nozzle 104 is shown in the context of a turbofan jet aircraft engine. Further, in various embodiments, nacelle 108, having one or both of thrust reverser 102 and variable area fan nozzle 104, may be mounted to a wing or fuselage of an aircraft, for example, by a pylon or other similar support. In addition, while the disclosure that follows focuses primarily on thrust reverser 102 and variable area fan nozzle 104, the disclosure contemplates the systems and methods described herein to apply to any translating component, including, for example, and without limitation, translating nacelle inlet and exit components or surfaces and translating control surface components or surfaces, as well as components or surfaces associated with thrust reversers and variable area fan nozzles.

In various embodiments, translating nozzle 128 is an annular airfoil-like structure mounted proximate the trailing edge of translating sleeve 125 and which circumscribes an engine core cowl 144 or the IFS 110. Due to the longitudinal variations in the diameter of the engine core cowl 144, selective fore and aft movement of translating nozzle 128 changes the size of the exit area A_{EXIT} of primary fan nozzle exit 142. As shown in FIG. 1A, translating nozzle 128 can include a first nozzle section 127 and a second nozzle section 129, each being generally arcuate in shape and configured to translate in the axial direction (as indicated by bidirectional arrow 131). Translation of translating nozzle 128 affects a desired size of upstream exit 140, and also varies the outlet geometry and the exit area A_{EXIT} of primary fan nozzle exit 142. Hence, when translating nozzle 128 is deployed, there is an increase in the bypass flow that is discharged through both upstream exit 140 and primary fan nozzle exit 142, which is enlarged as translating nozzle 128 translates in the aft direction. As illustrated in FIGS. 1A and 1B, translating nozzle 128 may be selectively translated fore and aft by a drive system 210.

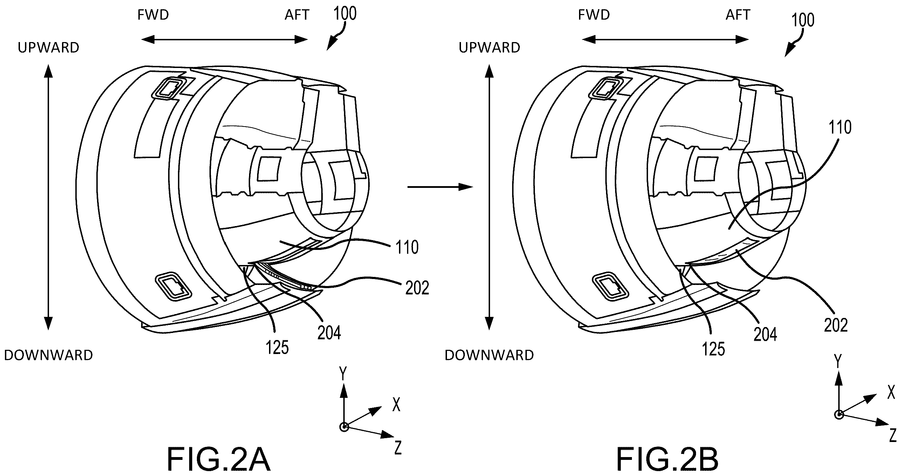

Referring FIGS. 2A and 2B illustrate a deployable drains mast (DDM) coupled to a propulsion system, such as propulsion system 100 of FIGS. 1A and 1B, in accordance with various embodiments. In various embodiments, a DDM 202 extends from a low location of an inner fixed structure (IFS), such as IFS 110 of FIGS. 1A and 1B, aft and downward to a location that is outside the translating sleeve, such as translating sleeve 125 of FIGS. 1A and 1B, in deployed state. In various embodiments, the DDM 202 may be hinged at or near the forward end 204, common to the IFS 110, such that the DDM 202 may rotate from an open position, as is illustrated in FIG 2A, to a stowed position, as illustrated in FIG. 2B, that is flush or substantially flush into a recess located on the IFS 110 or in close proximity to the IFS 110. In various embodiments, the DDM 202 may be stowed when the propulsion system 100 is running and deployed when the propulsion system 100 is not running. In various embodiments, the DDM 202 may be passively or actively controlled. In that regard, in a passive operation, gravity may deploy the DDM 202 at low speeds or when the aircraft is stopped and the DDM 202 may be stowed responsive to fan duct pressure.

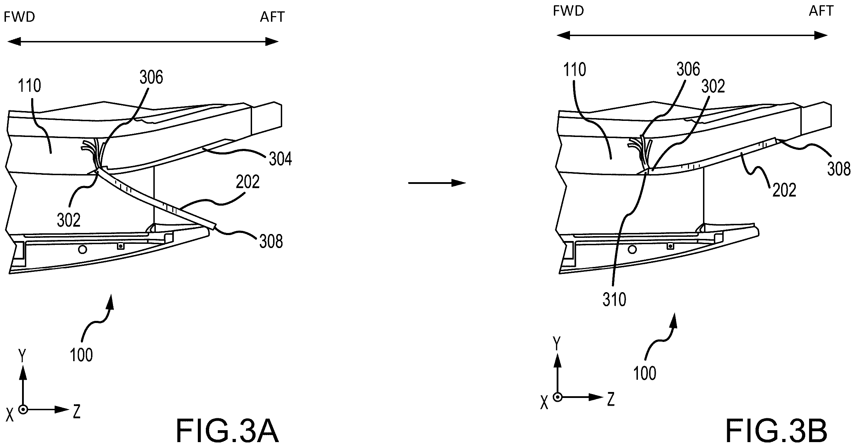

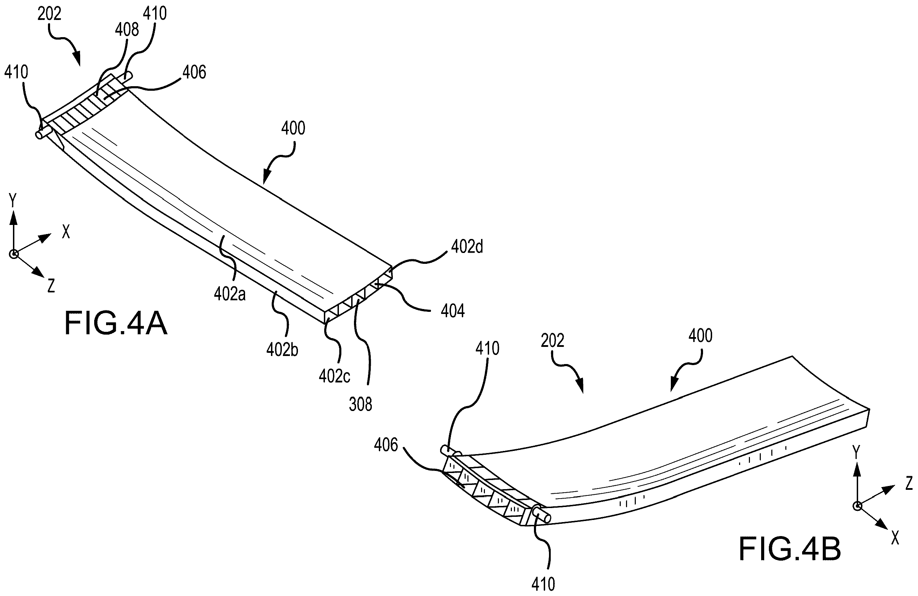

Referring now to FIGS. 3A and 3B, a close-up cross-sectional view of a deployable drains mast (DDM), such as DDM 202 of FIGS. 2A and 2B, coupled to a propulsion system, such as propulsion system 100 of FIGS. 1A and 1B, are illustrated, in accordance with various embodiments. In various embodiments, DDM 202 extends from a low location of an inner fixed structure (IFS), such as IFS 110 of FIGS. 1A and 1B, aft and downward to a location that is outside the translating sleeve in deployed state. In various embodiments, the DDM 202 may be hinged at location 302 at or near the forward end, common to the IFS 110, such that the DDM 202 may rotate between an open position, as is illustrated in FIG 3A, and a stowed position, as illustrated in FIG. 3B, that is substantially flush into a recess located on the IFS 110. In various embodiments, the IFS 110 may include a recess 304 in which, responsive to the DDM 202 transition to the stowed position, the DDM 202 may fit. In various embodiments, a plurality of drain lines 306 coupled to a gear box, oil tank, or other fluid producing component of the core compartment may couple to and/or fit within one or more channels of the DDM 202, as is illustrated in FIGS. 4A and 4B hereafter. In that regard, in the deployed state, fluid in drain lines 306 exits through drain lines 306 and out the drain exits 308 via gravity in the deployed state. Further, in the stowed state, fluid in drain lines 306 exits through drain lines 306 and out the drain exits 308 via a venturi effect forced by by-pass air that enters at opening 310. As stated previously, the DDM 202 may be passively or actively controlled. In that regard, in a passive operation, gravity may deploy the DDM 202 at low speeds or when the aircraft is stopped and the DDM 202 may be stowed via air passing over the outer portion of the DDM 202 via fan duct pressure. In that regard, in various embodiments, the outer portion of the DDM 202 is designed to create drag, which urges the mast to stow upon engine start-up. In various embodiments, in an active operation, an actuator (not shown) may be coupled to the DDM 202 at location 302 near the hinge line in order to rotate the DDM 202 between opened and stowed positions. In various embodiments, the actuator may be a hydraulic actuator, an electric actuator, or a pneumatic actuator, among others. In various embodiments, an alternate drain path may be provided near the hinge line at location 302 that opens as the DDM 202 rotates to the stowed position. In that regard, as the drain line 306 are couple to and/or fit within the one or more channels of the DDM 202, the drain lines are inserted into the one or more channels of the DDM 202 a predetermined distance to support the drain line 306 so that the one or more channels of the DDM 202 draw the fluids out the drain exits 308 via a venturi effect. However, if the venturi effect fails to force the flids out the drain exits 308, any remining fluid may drain forward to forward end of the DDM 202 and drain downward.

Referring now to FIGS. 4A and 4B, perspective views of a deployable drains mast (DDM) 202 are illustrated, in accordance with various embodiments. In various embodiments, DDM 202 is a bordered structure 400 bordered four exterior walls 402a, 402b, 402c, and 402d forming a cavity. In various embodiments, the cavity of the bordered structure 400 is divided longitudinally, in the z-direction, by a plurality of interior walls 404 thereby forming a plurality of channels 406. In various embodiments, the bordered structure 400 includes drain openings 408 to the plurality of channels 406 at a first end that receive and couple to the drain lines, such as drain lines 306 of FIGS. 3A and 3B. In that regard, as the drain line 306 may couple to and/or fit within the one or more channels of the DDM 202 and be retrained due to the forces of the inner portions of the one or more channels of the DDM 202 onto the outer surfaces of the drain lines 306. In various embodiments, the bordered structure 400 includes a drain exits 308 for the plurality of channels 406. In various embodiments, the plurality of channels 406 provide for an isolation of the various fluids until the various fluids exit the drain exits 308. In various embodiments, the plurality of channels 406 may be equal to or greater than a number of components within the core compartments that expel fluids. In that regard, in various embodiments, a width, in the x-direction, of the DDM 202 is based on a number of drain lines that will expel fluids through the plurality of channels 406 of the DDM 202. In various embodiments, a length of the DDM 202 may be application specific. While FIG. 4A and 4B illustrate the DDM 202 as being rectangular, the illustrative embodiments are not limited to only rectangular shapes. In that regard, the DDM 202 may be oval, circular, square, or rhombus, among others, in shape. In various embodiments, the DDM 202 includes hinges 410 configured to couple to an inner fixed structure (IFS) of the propulsion system in order for the DDM 202 may rotate between an open position, as is illustrated in FIG 3A, and a stowed position, as is illustrated in FIG 3B. In various embodiments, the hinges 410 couple to the IFS 110. In various embodiments, a spring may be added to the hinges 410 in order to balance the DDM 202 allowing minimum pressure to stow the DDM 202.

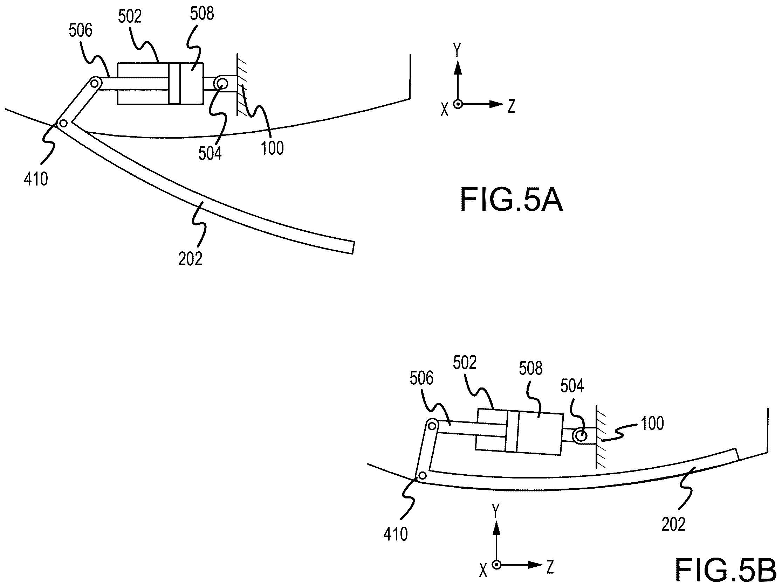

In various embodiments, the actuation of the DDM 202 may employ an enclosed pneumatic cylinder that extends or contracts based on heat generated within the engine core and thus, stows the DDM 202. Referring now to FIGS. 5A and 5B, a close-up cross-sectional view of a deployable drains mast (DDM), such as DDM 202 of FIGS. 2A and 2B, employing an enclosed pneumatic cylinder are illustrated, in accordance with various embodiments. In various embodiments, a pneumatic cylinder 502, which may be coupled to a propulsion system, such as propulsion system 100 of FIGS. 1A and 1B, via a hinge mechanism 504, includes a plunger 506 contained with the pneumatic cylinder 502 that is configured to translate in a z-direction based on air pressure within chamber 508. In that regard, as is illustrated in FIG. 5A, as the air pressure within chamber 508 is cooled and contracts, in various embodiments, the plunger 506 is configured to translate aft in a positive z-direction. Responsive to the plunger 506 translating aft in the positive z-direction, the DDM 202 rotates about the hinges 410 to a deployed position. In further regard, as is illustrated in FIG. 5B, as the air pressure within chamber 508 is heated and expands, in various embodiments, the plunger 506 is configured to translate forward in a negative z-direction. Responsive to the plunger 506 translating forward in the negative z-direction, the DDM 202 rotates about the hinges 410 to a stowed position. While FIGS. 5A and 5B illustrate a pneumatic cylinder, the illustrative embodiments are not limited only to a pneumatic cylinders. In that regard, the operation performed by the cylinders that operate on hydraulic pressure or electrical pressure, among others.

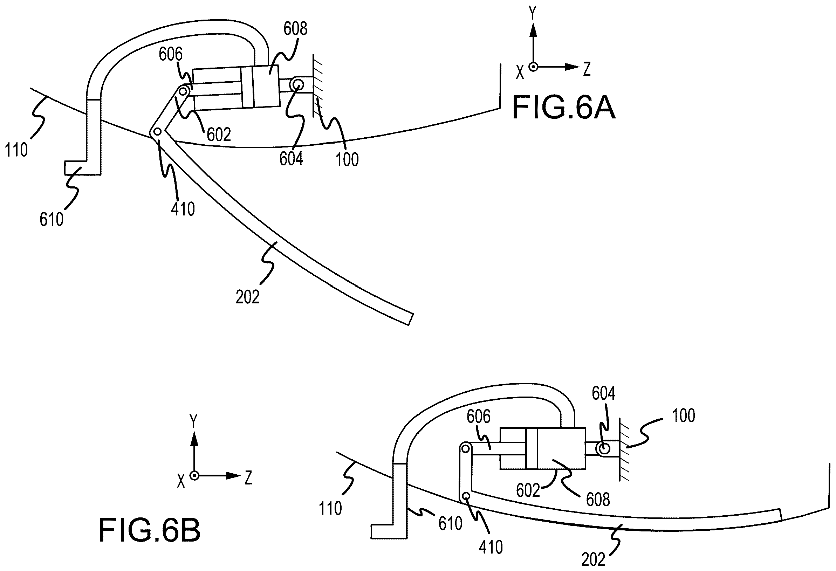

In various embodiments, the actuation of the DDM 202 may include a ram air pressure port within the duct that pressurizes a pneumatic actuator and in turn stows the DDM 202. Referring now to FIGS. 6A and 6B, a close-up cross-sectional view of a deployable drains mast (DDM), such as DDM 202 of FIGS. 2A and 2B, employing a ram air pressure port within the duct that pressurizes a pneumatic actuator are illustrated, in accordance with various embodiments. In various embodiments, a pneumatic actuator 602, which may be coupled to a propulsion system, such as propulsion system 100 of FIGS. 1A and 1B, via a hinge mechanism 604, includes a plunger 606 contained with the pneumatic actuator 602 that is configured to translate in a z-direction based on air pressure within chamber 608. In that regard, as is illustrated in FIG. 6A, as air pressure entering the chamber 608 via pressure port 610 decreases, in various embodiments, the plunger 606 is configured to translate aft in a positive z-direction. Responsive to the plunger 606 translating aft in the positive z-direction, the DDM 202 rotates about the hinges 410 to a deployed position. In further regard, as is illustrated in FIG. 6B, as air pressure entering the chamber 608 via pressure port 610 increases, in various embodiments, the plunger 606 is configured to translate forward in a negative z-direction. Responsive to the plunger 606 translating forward in the negative z-direction, the DDM 202 rotates about the hinges 410 to a stowed position. While FIGS. 6A and 6B illustrate a pneumatic actuator, the illustrative embodiments are not limited only to a pneumatic actuators. In that regard, the operation performed by the actuators that operate on hydraulic pressure or electrical pressure, among others.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element is intended to invoke 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A deployable drains mast for draining fluids from a propulsion system, the deployable drains mast comprising:
a bordered structure, the bordered structure comprising:
a plurality of exterior walls forming a cavity;
at least one drain opening to the cavity located at a first end of the bordered structure, the at least one drain opening configured to receive a drain line from a component of a core compartment of the propulsion system, the drain line configured to drain a fluid from the component; and
at least one drain exit from the cavity located at a second end of the bordered structure opposite the first end, the at least one drain exit configured to expel the fluid that enters the cavity at the drain opening.

2. The deployable drains mast of claim 1, further comprising:
a set of hinges, the set of hinges coupled to an exterior of the bordered structure at the first end of the bordered structure and configured to couple to an inner fixed structure of the propulsion system.

3. The deployable drains mast of claim 2, wherein the set of hinges are configured to allow the deployable drains mast to rotate between an open position and a stowed position.

4. The deployable drains mast of claim 3, wherein the deployable drains mast deploys to the open position via gravity responsive to the propulsion system not running.

5. The deployable drains mast of claim 4, wherein the fluid exits the deployable drains mast via the gravity responsive to the deployable drains mast being deployed.

6. The deployable drains mast of any of claims 3 to 5, wherein the deployable drains mast moves to the stowed position via fan duct pressure responsive to the propulsion system running.

7. The deployable drains mast of claim 6, wherein the deployable drains mast includes a spring coupled to the set of hinges in order to balance the deployable drains mast allowing minimum pressure to stow the deployable drains mast.

8. The deployable drains mast of claim 6 or 7, wherein the fluid exits the deployable drains mast via a venturi effect responsive to the deployable drains mast being stowed.

9. The deployable drains mast of claim 3, wherein the deployable drains mast moves to the open position via a cylinder that contracts based on a lack of heat generated within an engine core of the propulsion system and wherein the deployable drains mast moves to the stowed position via the cylinder that contracts based on the heat generated within the engine core of the propulsion system.

10. The deployable drains mast of claim 3, wherein the deployable drains mast moves to the open position via a low pressure in an actuator and wherein the deployable drains mast moves to the stowed position via a high pressure in an actuator.

11. A propulsion system comprising:
an inner fixed structure; and
the deployable drains mast of any preceding claim.

12. An aircraft comprising:
the propulsion system of claim 11.
